# EUROPÄISCHE PATENTANMELDUNG

(11) **EP 4 575 480 A1**
(43) Veröffentlichungstag der Anmeldung: **25.06.2025**
(21) Anmeldenummer: 24214684.3
(22) Anmeldetag: 22.11.2024
(51) Int. Cl.: G01N 27/02

(54) **ENTNAHMELANZE ZUR ENTNAHME VON FLÜSSIGEM REINIGUNGSMITTEL AUS EINEM REINIGUNGSMITTELBEHÄLTER UND VERFAHREN ZUM BETREIBEN EINER ENTNAHMELANZE**

(30) Priorität: 20.12.2023 DE 102023135913
(71) Anmelder: Miele & Cie. KG, 33332 Gütersloh (DE)
(72) Erfinder: Determann, Felix, 31275 Lehrte (DE)

(57) **Zusammenfassung**

Die Erfindung betrifft eine Entnahmelanze (100) zur Entnahme von flüssigem Reinigungsmittel (245) aus einem Reinigungsmittelbehälter (250), wobei die Entnahmelanze (100) eine erste Spule (120) zum Ausbilden eines Magnetfeldes in einer Spulenkammer (110) zur Aufnahme des Reinigungsmittels (245) und eine zweite Spule (120) zum Empfangen eines Magnetfeldes umfast, wobei die erste und die zweite Spule (120, 125) an einem freien Ende der Entnahmelanze (100) angeordnet sind.

## Beschreibung

Die Erfindung betrifft eine Entnahmelanze zur Entnahme von flüssigem Reinigungsmittel aus einem Reinigungsmittelbehälter und ein Verfahren zum Betreiben einer Entnahmelanze.

In Reinigungsgeräten wird oftmals eine direkte Entnahme von Reinigungsmittel aus einem Kanister oder allgemein einem Behälter durchgeführt, um möglichst wenige manuelle Eingriffe für Bediener dieser Reinigungsgeräte erforderlich zu machen. Hierfür kann eine Integration von Leitfähigkeitssonden in der Nähe der Pumpen der Flüssigdosierung oder eine Integration direkt in der wasserführenden Maschine, wie einer Wasch- oder Spülmaschine als Reinigungsgerät vorgenommen werden, wobei die Messung größtenteils während dem aktiven Reinigungsprogramm und z. B. mit erhöhter Temperatur passiert.

Die Anwendung der oben genannten Sonden erfolgt zumeist in Edelstahlrohren, um die Produktqualität während der laufenden Produktion zu testen, wie bei der Ultrafiltration oder bei der Chromatographie. Weiterhin kann eine solche Messung genutzt werden, um Cleaning-in-Place (CIP) Prozesse zu überprüfen.

Die Problematik bei derartigen Messungen ist oftmals die unzureichende Genauigkeit, speziell bei der Ausführung von derartigen Leitfähigkeitsmessungen. Die Leitfähigkeit ist neben der Menge/Konzentration an chemisch leitenden Stoffen innerhalb der Lösung auch von der Temperatur abhängig. Entsprechend ist eine besonders gute Temperaturkompensierung notwendig um eine gute Differenzierung zu erreichen, die weiter geht als "Chemie vorhanden"/"Chemie nicht vorhanden", wobei der Begriff "Chemie" ein jeweils verwendetes Reinigungsmittel bezeichnet. Noch wichtiger ist die Unsicherheit, die durch die Menge an Wasserhärte im geführten Wasser mit in das System gebracht wird und damit insbesondere bei niedrigen Chemie- bzw. Reinigungsmittelkonzentrationen eine Unsicherheit darstellt. Damit ist keine eineindeutige Identifikation der verwendeten Chemie bzw. des verwendeten Reinigungsmittels möglich.

Weiterhin müsste zur Kalibrierung der Leitfähigkeitssonde die Sonde z.B. einmal pro Monat aus der Maschine genommen werden oder alternativ entsprechende Kalibrierflüssigkeit in einer größeren Menge in die Maschine geleitet werden, was einen enormen Aufwand mit sich bringt. Im Feld bzw. vor Ort wird zum Teil die Flüssigchemie bzw. das verwendete Reinigungsmittel verdünnt, um es z. B. zu strecken oder um letzte Reste nutzen zu können. Bisher ist es sehr schwierig, eine solche Streckung belastbar nachzuweisen. Im Falle eines schlechten Waschergebnisses wird dann häufig an den Maschinenhersteller herangetreten, obwohl die Problematik in einer fehlerhaften Dosierung der Chemie zu suchen ist.

Der hier vorgestellte Ansatz stellt sich die Aufgabe, eine verbesserte Entnahmelanze, ein verbessertes Verfahren zum Betreiben der Entnahmelanze sowie eine verbesserte Steuereinheit zu schaffen.

Erfindungsgemäß wird diese Aufgabe durch eine Entnahmelanze, ein Verfahren zum Betreiben der Entnahmelanze sowie eine Steuereinheit mit den Merkmalen der Hauptansprüche gelöst. Vorteilhafte Ausgestaltungen und Weiterbildungen der Erfindung ergeben sich aus den nachfolgenden Unteransprüchen.

Der vorliegende Ansatz schafft eine Entnahmelanze zur Entnahme von flüssigem Reinigungsmittel aus einem Reinigungsmittelbehälter, wobei die Entnahmelanze die folgenden Merkmale aufweist:
- eine erste Spule zum Ausgeben eines Sendemagnetfeldes in einer Spulenkammer zur Aufnahme des Reinigungsmittels; und
- eine zweite Spule zum Empfangen eines Empfangsmagnetfeldes, wobei die erste und die zweite Spule an einem freien Ende der Entnahmelanze angeordnet sind.

Die erste Spule und die zweite Spule können dabei voneinander elektrisch isoliert oder getrennt angesteuert bzw. deren Signale ausgewertet werden. Die erste Spule kann ausgebildet sein, um ein Sendemagnetfeld in den Aufnahmeraum auszusenden, in welchen beispielsweise Reinigungsmittel eingebracht werden. Die zweite Spule sollte derart angeordnet oder ausgerichtet sein, dass ein Magnetfeld zensiert werden kann, welches sich im Aufnahmeraum ausbildet oder welches durch eine Magnetisierung oder Polarisierung von Teilen des Reinigungsmittels im Aufnahmeraum bewirkt wird. Die erste und zweite Spule sind hierbei an einem freien, d.h. äußeren Ende der Entnahmelanze angeordnet, an welchem günstiger Weise auch eine Aufnahmeöffnung oder Ansaugöffnung für das Reinigungsmittel befindet.

Der hier vorgestellte Ansatz basiert auf der Erkenntnis, dass durch die Verwendung der ersten Spule und der zweiten Spule sehr effizient eine Sensierung oder Erkennung von Parametern des Reinigungsmittels ausgeführt werden kann, um beispielsweise das tatsächliche Anliegen des Reinigungsmittels an der Entnahmelanze zu erkennen oder auch um durch diesen Parameter des Reinigungsmittels zu erkennen, um welches Reinigungsmittel es sich vorliegend handelt und welches durch die Entnahmelanze aufgenommen werden soll. Dabei kann speziell eine Isolation oder Umhüllung der ersten und/oder zweiten Spule ermöglicht werden, die eine Beschädigung dieser Spulen erschwert oder verhindert, ohne jedoch Einschränkungen für das vorliegend gewählte physikalische Messverfahren befürchten zu müssen. Während gemeinhin versucht wird, im Radius von einigen Zentimetern um die Messsonde keine weiteren Stoffe zu haben, die nicht das zu messende Medium sind, so kann in dieser Erfindung der Einfluss minimiert und sogar kompensiert werden. Dies kann gemacht werden, da das System Kanister mit Sauglanze als nicht-dynamisches System beschrieben werden kann, ähnlich wie es beispielsweise bei der Zellkonstante gemacht wird. So kann der Einfluss auf die Messung durch den Kanister, welcher meist aus Polypropylen (PP) besteht und der Sauglanze, welche z.B. aus Polytetrafluorethylen (PTFE) oder Polyvinylchlorid (PVC) bestehen kann, quantifiziert werden, um so die Messergebnisse zu kompensieren und die Genauigkeit der Messung zu garantieren.

Günstig ist eine Ausführungsform des hier vorgeschlagenen Ansatzes, bei der die erste und/oder die zweite Spule derart ausgerichtet ist, dass eine Spulenachse der ersten und/oder zweiten Spule im Wesentlichen längs zu einer Entnahmerichtung von Reinigungsmittel mittels der Entnahmelanze ausgerichtet ist. Unter einer Spulenachse kann eine Achse verstanden werden, die im Wesentlichen normal zur Wicklungsrichtung oder Wicklungsebene ausgerichtet ist. Unter einer Entnahmerichtung von Reinigungsmittel durch die Entnahmelanze kann beispielsweise die Richtung verstanden werden, in welche das Reinigungsmittel aus dem Reinigungsmittelbehälter aufgenommen und/oder durch die Entnahmelanze weitergeleitet wird. Eine derartige Ausführungsform des hier vorgeschlagenen Ansatzes bietet den Vorteil, durch die Ausrichtung der Spulen beim Eintauchen der Entnahmelanze in einen mit sehr wenigen Reinigungsmittel gefüllten Reinigungsmittelbehälter doch hinreichend zuverlässige Messergebnisse zu halten, auch wenn nur ein geringer Anteil von Reinigungsmittel in den Aufnahmeraum hineinreicht oder dort mit einem entsprechenden induzierten Magnetfeld wechselwirkt.

Denkbar ist ferner eine Ausführungsform des hier vorgeschlagenen Ansatzes, bei der die erste und/oder die zweite Spule derart ausgerichtet ist, dass eine Spulenachse der ersten und/oder zweiten Spule im Wesentlichen quer zu einer Entnahmerichtung von Reinigungsmittel mittels der Entnahmelanze ausgerichtet ist. Eine solche Ausführungsform bietet den Vorteil, einen Parameter des Reinigungsmittels besonders präzise messen zu können. Zusätzlich erfordert eine derartige Anordnung der Spulen nur einen sehr geringen Bauraum, sodass die Entnahmelanze möglichst klein gehalten werden kann.

Gemäß einer weiteren Ausführungsform des hier vorgeschlagenen Ansatzes kann die erste und zweite Spule in einem fluiddichten Gehäuse angeordnet und/oder gegenüber Umwelteinflüssen fluiddicht geschützt angeordnet sein. Eine solche Ausführungsform bietet den Vorteil einer möglichst geringen Beschädigungsgefahr der Spulen durch aggressive Stoffe oder mechanische Einwirkungen von außerhalb der Entnahmelanze.

Günstig ist ferner eine Ausführungsform des hier vorgeschlagenen Ansatzes, bei der die erste und/oder zweite Spule in einer Spulenkammer angeordnet sind, insbesondere die von einer Aufnahmeöffnung für Reinigungsmittels durch zumindest eine Wand getrennt ist. Eine derartige Ausführungsform des hier vorgeschlagenen Ansatzes bietet den Vorteil, durch die Spulenkammer einen geschützten Messbereich zu erhalten, in dem sich das Reinigungsmittel sammeln kann. Auch kann durch die entsprechende Wand vermieden werden, dass durch das Ansaugen des Reinigungsmittels Änderungen des Füllstands erfasst werden, die allein durch die Entnahme des Reinigungsmittels bedingt sind und somit einen fehlerhaften Parameter für das Reinigungsmittel bei einer entsprechenden Erfassung liefern könnten.

Besonders günstig ist eine Ausführungsform des hier vorgeschlagenen Ansatzes, bei der in der Spulenkammer zumindest eine Spulenkammeröffnung zur Entlüftung der Spulenkammer vorgesehen ist. Eine solche Ausführungsform bietet den Vorteil, ein möglicherweise beim Einführen der Entnahmelanze in den Reinigungsbehälter entstehendes Luftpolster aus der Spulenkammer ablassen zu können, sodass eine präzise Messung eines Parameters des Reinigungsmittels ermöglicht werden kann.

Auch kann gemäß einer anderen Ausführungsform des hier vorgeschlagenen Ansatzes die Entnahmelanze ferner einen Schwimmschalter aufweisen, insbesondere wobei der Schwimmschalter in einer Schwimmschalterkammer angeordnet ist und/oder zumindest eine Schwimmschalteröffnung zur Entlüftung der Schwimmschalterkammer vorgesehen ist. Eine derartige Ausführungsform bietet den Vorteil, dass durch die Auswertung eines Signals von dem Schwimmschalter zuverlässig das Eintauchen der Entnahmelanze in das Reinigungsmittel detektiert werden kann, sodass ein unnötiger Aufwand für eine Messung eines Parameters des Reinigungsmittels vermieden werden kann, wenn die Entnahmelanze beispielsweise nicht in den Reinigungsmittelbehälter eingeführt ist.

Beispielsweise kann auch gemäß einer anderen Ausführungsform des hier vorgeschlagenen Ansatzes die Entnahmelanze ferner eine Aufnahmekammer aufweisen, in der zumindest eine Aufnahmeöffnung zur Aufnahme des Reinigungsmittels durch die Entnahmelanze vorgesehen ist. Eine solche Aufnahmekammer kann beispielsweise von einer Spulenkammer getrennt ausgeführt sein, beispielsweise durch eine entsprechende Wand, sodass eine Messung eines Parameters des Reinigungsmittels auch erfolgen kann, wenn durch die Aufnahmeöffnung Reinigungsmittel durch die Entnahmelanze aus dem Reinigungsmittelbehälter angesaugt und entsprechend zum Reinigungsgerät geführt wird.

Von Vorteil ist auch eine Ausführungsform des hier vorgestellten Ansatzes, die ferner einen Kontaktsensor aufweist, der ausgebildet ist, um bei einem Kontakt mit der Reinigungsflüssigkeit ein Kontaktsignal auszugeben. Beispielsweise kann der Kontaktsensor als Platin-Stift oder -Plättchen ausgebildet sein, und eine Kapazitätsänderung oder eine Widerstandsänderung gegenüber einer weiteren Elektrode erfahren, wenn der Kontaktsensor mit dem Reinigungsmittel in Kontakt kommt. Hierdurch kann eine einfache und kostengünstige Erfassung des Anliegens des Reinigungsmittels an der Entnahmelanze realisiert werden.

Die vorstehend genannten Vorteile lassen sich auch unter Verwendung einer Ausführungsform des hier vorgeschlagenen Ansatzes als Verfahren zum Betreiben einer Variante einer hier vorgestellten Entnahmelanze realisieren, wobei das Verfahren die folgenden Schritte aufweist:
- Beaufschlagen der ersten Spule der Entnahmelanze mit einem Ausgabespannungssignal zur Ausbildung des Magnetfeldes; und
- Empfangen eines Empfangsspannungssignals von der zweiten Spule; und
- Auswerten des Empfangsspannungssignals, um einen Parameter der Reinigungsflüssigkeit zu bestimmen.

Besonders vorteilhaft ist hierbei eine Ausführungsform des vorgeschlagenen Ansatzes, bei dem im Schritt des Auswertens ein Vergleich des Parameters der Reinigungsflüssigkeit mit einer in einem Speicher abgelegten Referenzparameter ausgeführt wird, um einen Typ des Reinigungsmittels zu identifizieren, insbesondere um einen Reinigungsvorgang unter Verwendung des identifizierten Typs des Reinigungsmittels anzusteuern. Eine solche Ausführungsform bietet den Vorteil, durch den Vergleich des bestimmten Parameters der Reinigungsflüssigkeit mit dem Referenzparameter einen Rückschluss auf den Typ oder die Art des aktuell an der Entnahmelanze anliegenden Reinigungsmittels ziehen zu können, wenn beispielsweise der Referenzparameter einem bekannten Reinigungsmittel entspricht, welches üblicherweise in Verbindung mit der Entnahmelanze verwendet wird. Hierdurch lassen sich beispielsweise Sicherungsfunktionen realisieren, die eine Warnung ausgeben, wenn ein unpassendes oder unbekanntes Reinigungsmittel verwendet werden soll oder es kann automatisch ein Parameter eines in dem Reinigungsgerät auszuführenden Reinigungsprogramms in Abhängigkeit von dem bestimmten Parameter verändert werden, um ein möglichst optimales Reinigungsergebnis zu erhalten.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Denkbar ist ferner auch eine Ausführungsform des hier vorgeschlagenen Ansatzes als Reinigungsgerät mit einer Variante einer hier vorgestellten Steuereinheit und/oder einer Varianten einer hier vorgestellten Entnahmelanze.

Auch wenn der beschriebene Ansatz anhand eines professionellen Gerätes beschrieben wird, beispielsweise einem medizinischen Gerät, wie einem Reinigungs- oder Desinfektionsgerät, einem Kleinsterilisator, einem Großraumdesinfektor oder einer Container-Waschanlage, kann der hier beschriebene Ansatz auch entsprechend im Zusammenhang mit einem Hausgerät eingesetzt werden.

Ausführungsbeispiele der Erfindung sind in den Zeichnungen rein schematisch dargestellt und wird nachfolgend näher beschrieben. Es zeigt
- Figur 1: eine Ansicht eines Ausführungsbeispiels einer Entnahmelanze von unten;
- Figur 2: eine Seitenschnittansicht des in der Figur 1 dargestellten Ausführungsbeispiels der in der Entnahmelanze befindlichen Messsonde;
- Figur 3: eine weitere Seitenschnittansicht der in der Entnahmelanze befindlichen Messsonde aus der Figur 1 oder 2;
- Figur 4: eine schematische Darstellung von unten auf zwei weitere Ausführungsbeispiele einer Entnahmelanze;
- Figur 5: eine Seitenschnittansicht des in der Figur 4 dargestellten Ausführungsbeispiels der in der Entnahmelanze befindlichen Messsonde;
- Figur 6: eine Schnittdarstellung durch ein weiteres Ausführungsbeispiel der Entnahmelanze; und
- Figur 7: ein Ablaufdiagramm eines Ausführungsbeispiels des hier vorgeschlagenen Ansatzes als Verfahren zum Betreiben einer Variante einer hier vorgestellten Entnahmelanze.

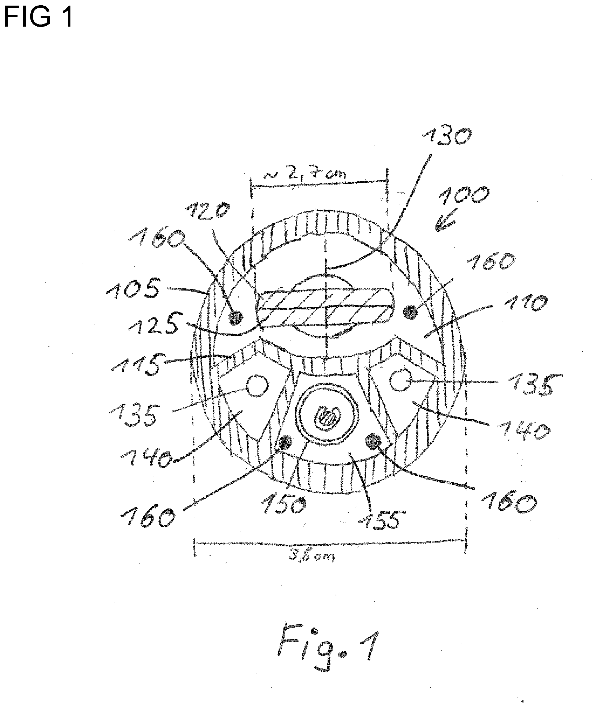

Figur 1 zeigt eine Ansicht eines Ausführungsbeispiels einer Entnahmelanze 100 von unten. Hierbei ist eine kreisförmige Gehäusewand 105 zu erkennen, die einen äußeren Rand der Entnahmelanze 100 bildet. In einem oberen Bereich ist eine Spulenkammer 110 ausgebildet, die durch eine Wand 115 von weiteren Kammern der Entnahmelanze 100 abgetrennt ist. In der Spulenkammer 110 ist eine Induktivelektrode vorgesehen, die eine erste Spule 120 und eine zweite Spule 125 aufweist. Die erste Spule 120 und die zweite Spule 125 sind dabei derart ausgerichtet, dass sie in eine gemeinsame hohle Achse 130 weißen, die hier beispielsweise in der Zeichenebene liegt und somit quer zu einer Aufnahmerichtung des Reinigungsmittels, wenn die dosierte Lanze 100 in einen in der Figur 1 nicht dargestellten Reinigungsbehälter eingeführt ist. Diese Aufnahmerichtung des Reinigungsmittels wäre in diesem Fall in die Zeichenebene hinein durch die Entnahmelanze 100, beispielsweise über entsprechende Aufnahmeöffnungen 135 in entsprechenden Aufnahmekammern 140, die durch die Wand 115 von der Spulenkammer 110 getrennt angeordnet sind. Weiterhin weist die Entnahmelanze 100 noch einen Schwimmschalter 150 in einer Schalterkammer 155 auf, der beispielsweise ausgebildet ist, um bei einem Einführen der Entnahmelanze 100 in den in der Figur 1 nicht dargestellten Reinigungsmittelbehälter ein Signal zu geben, dass die Entnahmelanze 100 tatsächlich in das Reinigungsmittel eingetaucht ist. Weiterhin sind bei dem in der Figur 1 dargestellten Ausführungsbeispiel der Entnahmelanze 100 Entlüftungsöffnungen 160 in der Spulenkammer 110 und in der Schwimmschalterkammer 155 vorgesehen, die dazu dienen, ein möglicherweise entstehendes Luftpolster beim Einführen der Entnahmelanze 100 in das Reinigungsmittel über diese Entlüftungsöffnungen 160 abzulassen.

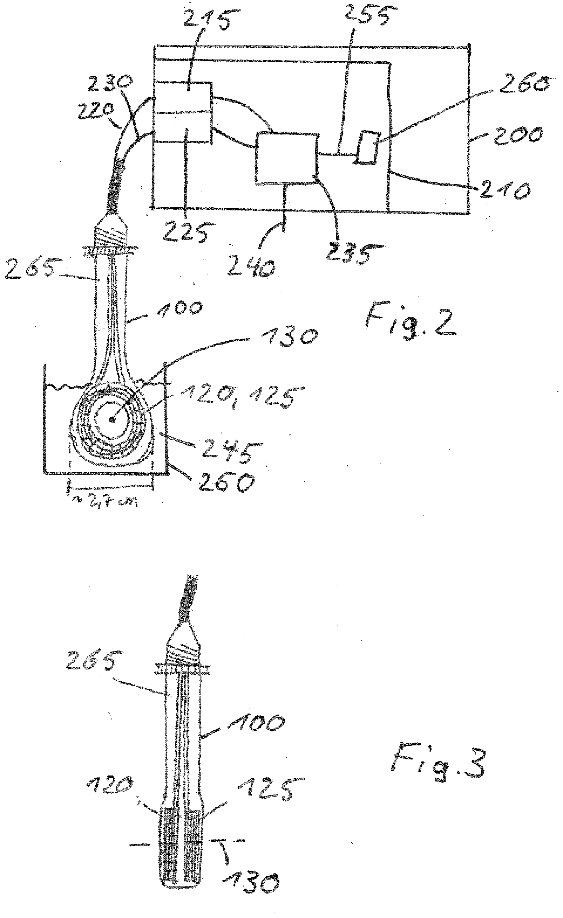

Figur 2 zeigt eine Seitenschnittansicht des in der Figur 1 dargestellten Ausführungsbeispiels der Entnahmelanze 100. Hierbei sind die erste Spule 120 und die zweite Spule 125 dargestellt, die jedoch übereinander liegen und somit zumindest teilweise verdeckt sind. Die erste Spule 120 und die zweite Spule 120 ist hierbei auch in der hohlen Achse 130 ausgerichtet, die quer zur Entnahmerichtung des Reinigungsmittels durch die Entnahmelanze 100 ausgerichtet ist, wobei diese Entnahmerichtung in diesem Fall nach oben hinweist, um das Reinigungsmittel von der Entnahmelanze 100 zu einem Reinigungsgerät 200 zu führen, damit es dort in einem Reinigungsvorgang gebraucht werden kann. Weiterhin umfasst das Reinigungsgerät 200 eine Steuereinheit 210, die zum Betreiben der Entnahmelanze 100 ausgebildet ist. Die Steuereinheit 210 umfasst dabei eine Einheit 215 zum Beaufschlagen der ersten Spule 120 der Entnahmelanze 100 mit einem Ausgabe Spannungssignal 220, damit durch die erste Spule 120 ein Magnetfeld in der Aufnahmekammer bzw. der Spulenkammer 110 ausgebildet werden kann. Weiterhin umfasst die Steuereinheit 210 eine Empfangseinheit 225, die ausgebildet ist, um ein Empfangsspannungssignal 230 von der zweiten Spule 125 zu empfangen. In einer Auswerteeinheit 235 kann dann das Empfangsspannungssignal 230 ausgewertet werden, um einen Parameter 240 der Reinigungsflüssigkeit 245 in dem Reinigungsmittel der 250 zu bestimmen, in welche die Entnahmelanze 100 eingetaucht wurde. Dieser Parameter 240 kann beispielsweise in der Auswerteeinheit zur 135 unter Zuhilfenahme eines Referenzparameters 255 bestimmt werden, der aus einem Speicher 260 geladen wird, wobei dieser Referenzparameter 255 beispielsweise einem Parameter einer bekannten Reinigungsflüssigkeit 245 entspricht und somit bei Übereinstimmung (beispielsweise innerhalb eines Toleranzbereichs von zehn Prozent) des aus dem Empfangsspannungssignal 230 ermittelten Parameters 240 erkannt werden, dass die Reinigungsflüssigkeit bzw. das Reinigungsmittel 245 denjenigen Reinigungsmittel entspricht, dessen zugeordneten Referenzparameter 255 aus dem Speicher 260 abgerufen wurde. Um nun zu vermeiden, dass die erste Spule 120 und die zweite Spule 125 von einer besonders aggressiven Reinigungsmittel 245 angegriffen wird oder entsprechend und gewünschte elektrische kontaktieren auftreten, ist die erste Spule 120 und die zweite Spule 125 in einer Ummantelung 265 bzw. einer Isolationsschicht umgeben, die die erste Spule 120 und die zweite Spule 125 fluiddicht von einer Außenumgebung der Entnahmelanze 100 abschirmt.

Figur 3 zeigt eine weitere Seitenschnittansicht der Entnahmelanze 100 aus der Figur 1 oder 2, wobei nun erkennbar ist, dass die erste Spule 120 und die zweite Spule 125 nebeneinander bzw. hintereinander auf der gleichen hohlen Achse 130 angeordnet sind, wobei diese Achse 130 im Wesentlichen senkrecht bzw. quer zur Entnahmerichtung des Reinigungsmittels ausgerichtet ist.

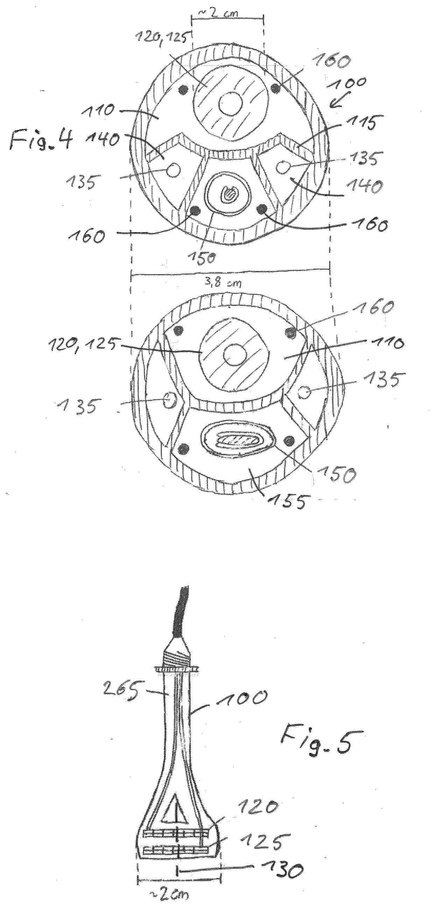

Figur 4 zeigt eine schematische Darstellung von unten auf zwei weitere Ausführungsbeispiele einer Entnahmelanze 100. Im Unterschied zu dem in den Figuren 1, 2 und 3 dargestellten Ausführungsbeispiel sind die Spulen 120 und 125 nun derart ausgerichtet, dass sich die Achse 130 durch die beiden Spulen 100 2020 nun entlang der Aufnahmerichtung des Reinigungsmittels erstreckt, nämlich hier in die Zeichenebene hinein. Dies kann sowohl aus der oberen Darstellung eines Ausführungsbeispiels der Entnahmelanze 100 als auch aus der unteren Darstellung eines der Entnahmelanze 100 aus der Figur 4 entnommen werden. In der unteren Darstellung aus Figur 4 ist weiterhin eine alternative Aufteilung der Spulenkammer 110, der Schwimmerschalterkammer 155 und der entsprechenden Wand 115 zu entnehmen.

Figur 5 zeigt eine Seitenschnittansicht des in der Figur 4 dargestellten Ausführungsbeispiels der Entnahmelanze 100. Hierbei ist zu erkennen, dass die erste Spule 120, die beispielsweise als Sendespule wirkt, als auch die zweite Spule 125, die als Empfangsspule wirkt, in Richtung der Achse 130 ausgerichtet sind, die im Wesentlichen der Aufnahmerichtung des Reinigungsmittels durch die Entnahmelanze 100 entspricht. Somit sind beispielsweise die erste Spule 120 und die zweite Spule 125 parallel zu einem freien Ende der Entnahmelanze 100 ausgerichtet, über welches Reinigungsmittel aus dem Reinigungsmittelbehälter aufgenommen werden kann.

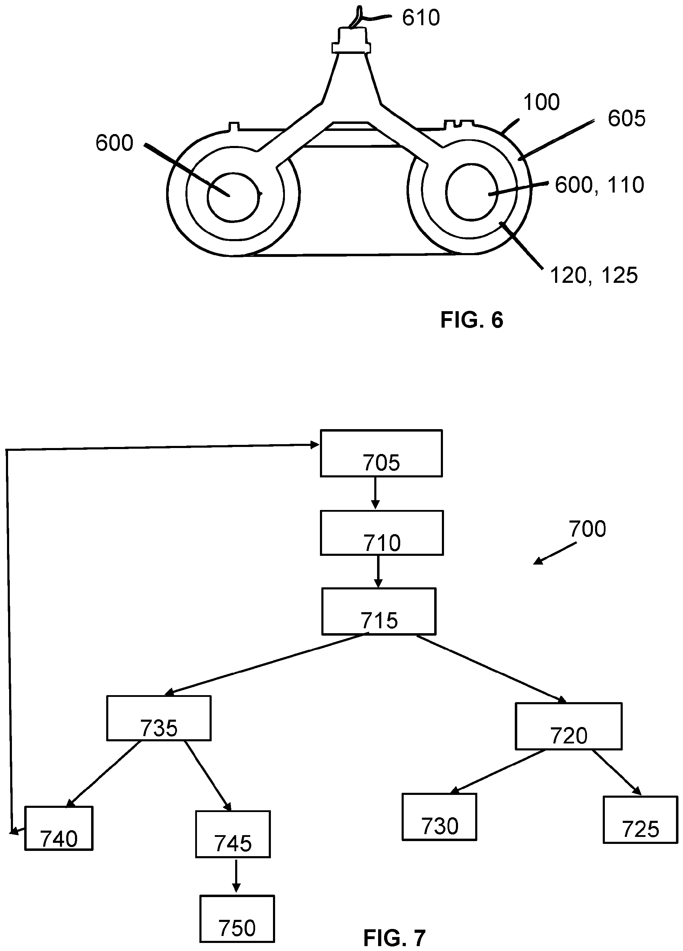

Figur 6 zeigt eine Schnittdarstellung durch ein weiteres Ausführungsbeispiel der Entnahmelanze 100. Hierbei ist ein induktiver Leitfähigkeitssensor in der Form der beiden Spulen 120 bzw. 125 (die entsprechend dem in der Figur 6 dargestellten Aufbau hintereinander angeordnet sind) um einen Ansaugschlauch 600 angeordnet, sodass dieser Schlauch 600 die Aufnahmekammer bzw. Spulenkammer 110 bildet. Auch kann ein Kontaktsensor 605, beispielsweise ein Platin-Stift oder -plättchen vorgesehen sein, um bei einem Kontakt dieses Kontaktsensors 605 ein Signal auszugeben, dass tatsächlich nun eine Flüssigkeit in dem Schlauch 600 fließt und eine entsprechende Ansteuerung der Spulen 120 bzw. 125 erfolgen kann. Über entsprechende Anschlüsse 610 können dann die Spule 120 bzw. 120 mit einer entsprechenden Spannung beaufschlagt werden oder eine entsprechende Spannung an diesen Spulen abgegriffen werden, um den Parameter des Reinigungsmittels zur bestimmen.

Figur 7 zeigt ein Ablaufdiagramm eines Ausführungsbeispiels des hier vorgeschlagenen Ansatzes als Verfahren 700 zum Betreiben einer Variante einer hier vorgestellten Entnahmelanze, wobei das Verfahren 700 einen Schritt 705 des Beaufschlagens der ersten Spule der Entnahmelanze mit einem Ausgabespannungssignal zur Ausbildung des Magnetfeldes umfasst. Weiterhin umfast das Verfahren 700 einen Schritt 710 des Empfangens eines Empfangsspannungssignals von der zweiten Spule und einen Schritt 715 des Auswertens des Empfangsspannungssignals, um einen Parameter der Reinigungsflüssigkeit zu bestimmen.

Bei dem Parameter kann sich beispielsweise um eine Leitfähigkeit handelt, die das aktuell an der Entnahmelanze 100 anliegende Reinigungsmittel aufweist. Dieser Parameter kann dabei in unterschiedlichen Varianten weiterverwendet werden.

Zum einen kann diese Weiterverwendung des bestimmte Parameters derart erfolgen, dass der bestimmte Parameter an eine Maschinenintelligenz eines Reinigungsgeräts wie beispielsweise einer wasch-/Spülmaschine weitergegeben wird (Schritt 720), wobei, wenn das anliegende Reinigungsmittel identifiziert werden kann, beispielsweise unter Verwendung des Referenzparameters, in einem weiteren Schritt 725 eine Dosierung bzw. ein Dosierprofil zur Verwendung des Reinigungsmittels in einem aktuell auszuführenden Reinigungsprogramm eingestellt wird wird das aktuell anliegende Reinigungsmittel jedoch nicht erkannt, kann eine weiteren Schritt 730 die Anlage eines neuen Profils für die Verwendung des aktuellen anliegenden Reinigungsmittels in einem Reinigungsprogramm vorgenommen werden.

Weiterhin kann auch der erhaltene Parameter für die Überwachung einer Qualitätssicherung an eine Pumpenintelligenz eines Pumpensystems weitergegeben werden (Schritt 735). Für den Fall, dass der Parameter innerhalb vordefinierter Spezifikationen liegt (Schritt 740) kann zurückgesprungen werden und eine erneute Ausführung der Verfahrensschritte angesteuert werden, um eine zyklische Überwachung des Parameters vorzunehmen. Wird dagegen durch die Pumpenintelligenz in Schritt 735 festgestellt, dass der Parameter außerhalb vorgegebener Spezifikationen liegt (Schritt 745) kann eine Fehlermeldung ausgegeben werden (Schritt 750).

Als Parameter kann, wie vorstehend beschrieben speziell die Leitfähigkeit des Reinigungsmittels herangezogen werden. Die Leitfähigkeit beschreibt die Fähigkeit eines leitfähigen chemischen Stoffes oder Stoffgemisches Energie wie z. B. elektrische Energie in Form von Strom im Raum zu leiten und zu übertragen. Für die Messung der Leitfähigkeit des Reinigungsmittels kann bei der induktiven Methode die Beaufschlagung und die darauf erfolgende Auswertung von Signalen über zwei elektromagnetische Spulen vorgenommen werden, wobei eine Spule der Sender und eine Spule der Empfänger ist. Diese Spulen sind in der Regel durch eine Kunststoffummantelung von aggressiven Medien geschützt.

Die Sendespule erzeugt ein magnetisches Wechselfeld, wodurch eine elektrische Spannung im Medium induziert wird, was die in der Flüssigkeit befindlichen Ionen in Bewegung versetzt, was einen Wechselstrom zur Folge hat. Dieser Wechselstrom erzeugt in der Empfängerspule ein magnetisches Wechselfeld. Die Leitfähigkeit ist direkt von der Rezeptur als auch der genutzten Ionen-Konzentration abhängig. Der erzeugte Strom in der Wicklung zumindest einer der Spulen wird in einem Messumformer ausgewertet und damit der Wert der elektrolytischen Leitfähigkeit errechnet. Über die Leitfähigkeit kann somit die verwendete flüssige Chemie bzw.das jeweils anliegende Reinigungsmittel eineindeutig bestimmt werden und erlaubt somit ein Tracking. Die Daten der Reinigungsmittel der Anmelderin sind beispielsweise in einer Datenbank oder im internen Speicher der Maschine bzw. des Reinigungsgerätes hinterlegt, sodass die gemessene Leitfähigkeit "gematched" bzw. durch einen Vergleich überprüft werden kann. Dies kann über eine kontinuierliche Messung auch für die Qualitätssicherung verwendet werden.

Die Auskristallisation von Salzen durch z. B. Exposition mit Luft ist ein bekanntes Stabilitätsproblem bei flüssigen Reinigungschemieprodukten. Diese auskristallisierten Salze können die Leitfähigkeit der Flüssigkeit reduzieren. Ebenfalls kann dadurch auch die Leitfähigkeit von Flüssigkeiten steigen, weil damit die Coulomb-Kraft der vorliegenden Ionen reduziert wird. Die Coulomb-Kraft ist insbesondere bei Chemikalien mit einer besonders hohen Konzentration an Ionen bei der Messung ausschlaggebend, da sich die Vielzahl von Ionen durch die Coulomb-Kraft gegenseitig behindern und somit den induzierten Stromfluss reduzieren. Daher kann ein oberes und ein unteres Limit für die Spezifikation definiert werden. Die Messung der Leitfähigkeit kann amperometrisch, potentiometrisch oder konduktiv/induktiv erfolgen. Für diese Anwendung ist die Induktionsmessung präferiert. Besonders präferiert ist eine Induktionsmessung die einen Bereich von 10-4 bis 10° S/cm mit einer Genauigkeit kleiner ±1% und einer Reproduzierbarkeit von ±0,5% abdecken kann. Eine Erweiterung der im Speicher abgelegten Daten von Wasch- bzw. Reinigungsmitteln von weiteren Herstellern ist ebenfalls denkbar. Zur Implementierung der Messung sind zwei Möglichkeiten, sowohl in der professionellen Wäschepflege und Geschirrreinigung als auch der Haushalts-Wäschepflege denkbar:
Professional (Dosierlanzen als Entnahmelanze 100):
Eine Leitfähigkeitssonde wird bereits unten an der Dosier- bzw. Entnahmelanze 100 angebracht, welche mit der Maschine 200 und/oder sonstigen Teilen der Flüssigdosierung kommuniziert. Ein Vorteil bei dieser Ausführung ist die bereits vorhandene Verdrahtung der Dosierlanze 100 mit dem Pumpensystem zur Verwendung eines Schwimmschalters zur Niveauerkennung. Präferiert ist eine Version, bei der sowohl die Sonde als auch der Schwimmschalter innerhalb der Dosierlanze integriert sind. Besonders präferiert ist eine Version, bei der mindestens zwei Entnahmepunkte zur Dosierung der Chemie bzw. des Reinigungsmittels bestehen bleiben. Dabei sind zwei Möglichkeiten zu Anordnung der Sonden denkbar. Möglichkeit 1 ist Figur 1 bis 3 entnehmen. Die Abbildung in diesen Figuren zeigt eine Darstellung einer veränderten herkömmlichen, kommerziell verfügbaren induktiven Leitfähigkeitssonde, die innerhalb einer ebenfalls herkömmlichen Dosierlanze 100 eingebettet ist. Im Unterschied zur herkömmlichen Dosierlanze wurde hier jedoch in der in den Figuren 1 bis 3 darstellten Entnahmelanze 100 ein Ausgang zur Pumpe mit dem Schwimmschalter ersetzt, welcher normalerweise an der Stelle der Elektrode sitzt. Zur Sicherung der Funktionalität können Einbuchtungen in den Rändern der Dosierlanze eingebracht sein, die nicht in den Figuren 1 bis 3 nicht dargestellt sind und die zu einem seitlichen Zulauf des Reinigungsmittels dienen, um ein Festsaugen der Entnahmelanze 100 an einem Boden des Reinigungsmittelbehälters zu vermeiden. Über diese Einbuchtungen kann auch im Falle eines direkten Aufliegens der Dosierlanze auf dem Boden des Behältnisses weiterhin Chemie bzw. Reinigungsmittel gezogen werden. Weiterhin ist aus dem gleichen Grund eine Entlüftung standardmäßig verbaut.

Im Gegensatz dazu stellt die Entnahmelanze 100 entsprechend des Figuren 4 und 5 einen neuen Ansatz als Ersatz für die Elektrode dar. In dem in der oberen Darstellung aus Figur 4 wiedergegebenen Design 1 ist hierbei ein ähnlicher Aufbau der Entnahmelanze 100 wie in den Figuren 1 bis 3 erkennbar, mit dem großen Unterschied, dass die Elektrode bzw. die Spulen 120, 125 nun vertikal anstatt horizontal ausgerichtet sind. Die Idee ist dabei, dass mit dieser Ausrichtung noch tiefere Flüssigkeitsstände hinreichend präzise dargestellt bzw. gemessen werden können. In dem in der unteren Darstellung aus Figur 4 wiedergegebenen Design 2 ist eine Neuausrichtung der Kammern und Bereiche der Entnahmelanze 100 zu erkennen, um dem Schwimmschalter mehr Platz zu gewähren. Dabei werden die Medienausgänge bzw. die Aufnahmeöffnungen an die Seiten bzw. Ränder verlegt, um so den notwendigen Platz zu schaffen. Durch die Ausführung der Elektrode bzw. der spulen 120, 125 kann der notwendige Platz für die Elektrode auch reduziert werden.

Haushalt (TwinDos):
Eine Leitfähigkeitssonde wird innerhalb der Leitungen zur Pumpe angebracht. Eine denkbare Möglichkeit wäre die Unterbringung vor dem Platinsensor innerhalb der Haushaltswaschmaschine als Reinigungsgerät. Präferiert ist eine Positionierung der Sensoren nahe der Chemie, z. B. beim Platinsensor. Dieses System kann als Erweiterung des Platinsensors verstanden werden, der bereits den Widerstand misst um einen Stofffluss zu detektieren. Besonders bevorzugt ist eine Positionierung direkt innerhalb der Chemie, um bereits vor dem Pumpen eine Identifizierung zu ermöglichen. Die Verfügbarkeit einer solchen Sensorlösung macht eine solche Integration einfach und zugänglich.

Die technische Realisierung eines solchen Auswertesystems ist vereinfacht, da dort die von der Anmelderin verfügbare Chemie bzw. Reinigungsmittel begrenzter ist und somit Verschmutzungen und Änderungen in der Leitfähigkeit nur durch Miele-fremde Chemie auftreten können. Eine Darstellung eines solchen Ausführungsbeispiels ist in der Figur 6 wiedergegeben.

Das dem hier vorgestellten Ansatz zugrunde liegende System hat folgende Logik:
Sollte die Chemie bzw. das anliegende Reinigungsmittel bekannt sein (ergo die Leitfähigkeit mit einem Waschmittel bzw. Reinigungsmittel in der hinterlegten Datenbank gematched werden) so wird automatisch das Dosierprofil beispielsweise aus der Cloud (z. B. Miele MOVE) oder lokal abgerufen. Der Nutzer hat dann beispielsweise noch die Möglichkeit, Parameter wie Verschmutzung der Wäsche und Wasserhärte einzustellen, um so die ideale Flüssigdosierung mit nur zwei Clicks zu ermöglichen. Alternativ ist die Wasserhärte bereits hinterlegt, sodass eine weitere Einstellung nicht notwendig ist. Die Messung der Leitfähigkeit kann dabei vor dem Start jedes Waschprogramms erfolgen. Weiterhin kann das System eine einfache Zuordnung von Programm und Chemie bzw. Reinigungsmittel ermöglichen, so soll beispielsweise beim Anwählen des (Reinigungs-) Programms "Buntwäsche" präferiert das bekannte und durch Messung bestätigte Buntwaschmittel als Preset ausgewählt werden. Dem Nutzer und einem Kundendienst des Reinigungsgerätes kann somit Arbeit abgenommen werden. Sollte die Chemie bzw. das Reinigungsmittel nicht bekannt sein, so kann die Anlage eines neuen Profils für das Waschmittel bzw. Reinigungsmittels angesteuert werden, welches der Nutzer dann einstellen kann. Das Profil kann lokal oder online (z. B. Miele MOVE) gespeichert werden. In der Figur 7 ist ein Ablaufdiagramm einer soclhen Vorgehensweise wieder gegeben. Der hier vorgestellte Ansatz ist zunächst für eine Integration bei Reinigungsgeräten und Reinigungsmitteln der Anmelderin (Miele Waschchemie, Professional wie Haushalt) gedacht.

Sollte eine Vernetzung des Systems mit dem Internet möglich sein, können die Dosierungsdaten auch genutzt werden, um eine zentrale Datenbank bei der Anmelderin zu vergrößern. Weiterhin können diese Daten für das Marketing und die Anwendungstechnik verwendet werden.

Vorteilhafterweise wird die Gefahr einer falschen Dosierung des Reiniguimgsmitels bei der Verwendung des hier vorgestellten Ansatzes stark limitiert, da ein kontinuierliches Monitoring der Waschchemie bzw. des Reinigungsmittels erfolgt, anstatt nur punktuell. Dadurch können Wäscheschäden vermieden werden, da der Faktor Mensch zu großen Teilen entfernt wird. Außerdem können somit belastbare Daten im Falle eines unzureichenden Waschergebnisses erhalten und die Unterstützung für Kunden verbessert werden, indem eine Fehlerquelle besser quantifiziert und qualifiziert werden kann. Eine Streckung/Verdünnung der Waschchemie bzw. des Reinigungsmittels kann belastbar nachverfolgt und überprüft werden.

Es ergeben sich Zeitersparnisse für einen Nutzer und den Kundenservice des Reinigungsgerätes. Weiterhin können über die genommenen Werte der Second- und Third-Level-Support in ihrer Tätigkeit unterstützt werden, um Probleme, die mit der Waschchemie bzw. dem Reinigungsmittel in Verbindung stehen könnten, früher auszuschließen. Somit kann die Qualität des Services verbessert und die Kundenzufriedenheit erhöht werden.

Der hier vorgestellte Ansatz ist einfacher zu kalibrieren als bekannte Systeme. Weiterhin ist der hier vorgestellte Ansatz durch eine Beeinflussung durch Wasserhärte geschützt und erfährt nur eine geringe Beeinflussung durch Temperaturänderungen, die über eine Kompensierung abgefangen werden kann. Das System vereinfacht weiterhin die Integration neuer Reinigungsmittel bzw. Chemie im System der Nutzer.

Für den Haushalt kann der hier vorgestellte Ansatz den Platinsensor erweitern und nicht nur das Vorhandensein eines Durchflusses sensorisch festhalten, sondern auch die Chemie bzw. das Reinigungsmittel genau bestimmen.

## Patentansprüche

1. Entnahmelanze (100) zur Entnahme von flüssigem Reinigungsmittel (245) aus einem Reinigungsmittelbehälter (250), wobei die Entnahmelanze (100) die folgenden Merkmale aufweist:
- eine erste Spule (120) zum Ausbilden eines Magnetfeldes in einer Spulenkammer (110) zur Aufnahme des Reinigungsmittels (245); und
- eine zweite Spule (120) zum Empfangen eines Magnetfeldes, wobei die erste und die zweite Spule (120, 125) an einem freien Ende der Entnahmelanze (100) angeordnet sind.

2. Entnahmelanze (100) gemäß Anspruch 1, wobei die erste und/oder die zweite Spule (120, 125) derart ausgerichtet ist, dass eine Spulenachse (130) der ersten und/oder zweiten Spule (120, 125) im Wesentlichen längs zu einer Entnahmerichtung von Reinigungsmittel (245) mittels der Entnahmelanze (100) ausgerichtet ist.

3. Entnahmelanze (100) gemäß Anspruch 1, wobei die erste und/oder die zweite Spule (120, 125) derart ausgerichtet ist, dass eine Spulenachse (130) der ersten und/oder zweiten Spule (120, 125) im Wesentlichen quer zu einer Entnahmerichtung von Reinigungsmittel (245) mittels der Entnahmelanze (100) ausgerichtet ist.

4. Entnahmelanze (100) gemäß einem der vorangegangenen Ansprüche, wobei die erste und zweite Spule (120, 125) in einem fluiddichten Gehäuse (265) angeordnet und/oder gegenüber Umwelteinflüssen fluiddicht geschützt angeordnet ist.

5. Entnahmelanze (100) gemäß einem der vorangegangenen Ansprüche, wobei die erste und/oder zweite Spule (120, 125) in einer Spulenkammer (110) angeordnet sind, die von einer Aufnahmeöffnung (135) für Reinigungsmittel (145) durch zumindest eine Wand (115) getrennt ist.

6. Entnahmelanze (100) gemäß Anspruch 5, bei der in der Spulenkammer (110) zumindest eine Spulenkammeröffnung (160) zur Entlüftung der Spulenkammer (110) vorgesehen ist.

7. Entnahmelanze (100) gemäß einem der vorangegangenen Ansprüche, die ferner einen Schwimmschalter (150) aufweist, insbesondere wobei der Schwimmschalter (150) in einer Schwimmschalterkammer (155) angeordnet ist und/oder zumindest eine Schwimmschalteröffnung (160) zur Entlüftung der Schwimmschalterkammer (155) vorgesehen ist.

8. Entnahmelanze (100) gemäß einem der vorangegangenen Ansprüche, die ferner eine Aufnahmekammer (140) aufweist, in der zumindest eine Aufnahmeöffnung (135) zur Aufnahme des Reinigungsmittels (245) durch die Entnahmelanze (100) vorgesehen ist.

9. Entnahmelanze (100) gemäß einem der vorangegangenen Ansprüche, die ferner einen Kontaktsensor (605) aufweist, der ausgebildet ist, um bei einem Kontakt mit der Reinigungsflüssigkeit (245) ein Kontaktsignal auszugeben.

10. Verfahren (700) zum Betreiben einer Entnahmelanze (100) gemäß einem der vorangegangenen Ansprüche 1 bis 9, wobei das Verfahren (700) die folgenden Schritte aufweist:
- Beaufschlagen (705) der ersten Spule (120) der Entnahmelanze (100) mit einem Ausgabespannungssignal (220) zur Ausbildung des Magnetfeldes;
- Empfangen (710) eines Empfangsspannungssignals (230) von der zweiten Spule (125); und
- Auswerten (715) des Empfangsspannungssignals (230), um einen Parameter (240) der Reinigungsflüssigkeit (245) zu bestimmen.

11. Verfahren (700) gemäß Anspruch 10, bei dem im Schritt (715) des Auswertens ein Vergleich des Parameters (240) der Reinigungsflüssigkeit (245) mit einer in einem Speicher (260) abgelegten Referenzparameter (255) ausgeführt wird, um einen Typ des Reinigungsmittels (245) zu identifizieren, insbesondere um einen Reinigungsvorgang unter Verwendung des identifizierten Typs des Reinigungsmittels (245) anzusteuern.

12. Steuereinheit (210), die ausgebildet ist, um die Schritte (705, 710, 715) des Verfahrens (700) gemäß einem der vorangegangenen Ansprüche 10 oder 11 in entsprechenden Einheiten (215, 225, 235) auszuführen und/oder anzusteuern.

13. Reinigungsgerät (200) mit einer Steuereinheit (210) gemäß Anspruch 12 und/oder einer Entnahmelanze (100) gemäß einem der Ansprüche 1 bis 9.

14. Computer-Programmprodukt mit Programmcode zur Durchführung des Verfahrens (700) nach einem der Ansprüche 10 oder 11, wenn das Computer-Programmprodukt auf einer Steuereinheit (210) gemäß Anspruch 12 ausgeführt wird.

15. Maschinenlesbares Speichermedium, auf dem ein Computer-Programmprodukt gemäß Anspruch 14 gespeichert wird.
